## Europäisches Patentamt

## European Patent Office

## Office européen des brevets

(19)

(11) Veröffentlichungsnummer: **0 144 513**
**B1**

(12)

# EUROPÄISCHE PATENTSCHRIFT

(45) Veröffentlichungstag der Patentschrift:
**12.10.88**

(21) Anmeldenummer: **84108799.2**

(22) Anmeldetag: **25.07.84**

(51) Int. Cl.⁴: **B 26 D 1/02,** B 26 D 1/03,
B 26 D 3/24, A 01 J 27/04

(54) **Vorrichtung zum mechanischen Zerteilen von Käselaiben oder -blöcken.**

(30) Priorität: **03.11.83 DE 3339801**

(43) Veröffentlichungstag der Anmeldung:
**19.06.85 Patentblatt 85/25**

(45) Bekanntmachung des Hinweises auf die Patenterteilung:
**12.10.88 Patentblatt 88/41**

(84) Benannte Vertragsstaaten:
**AT BE CH DE FR GB IT LI LU NL SE**

(56) Entgegenhaltungen:
**DE-B-1 127 657**
**DE-B-2 903 335**
**GB-A-184 212**
**GB-A-941 941**
**GB-A-957 169**
**US-A-1 768 693**
**US-A-2 561 274**

(73) Patentinhaber: **Topp, Burkhard, Am Buschufer 1,
D-5840 Schwerte- Villigst (DE)**

(72) Erfinder: **Topp, Burkhard, Am Buschufer 1, D-5840
Schwerte- Villigst (DE)**

(74) Vertreter: **Patentanwälte Meinke und Dabringhaus
Dipl.- Ing. J. Meinke Dipl.- Ing. W. Dabringhaus,
Westenhellweg 67, D-4600 Dortmund 1 (DE)**

EP 0 144 513 B1

### Beschreibung

Die Erfindung betrifft eine Vorrichtung zum Zerteilen eines Käselaibes oder -blockes in einzelne, von Schnittkanten begrenzte Stücke mit einer mechanischen Zerteileinrichtung, die einen Hubtisch zur Förderung des Käselaibes durch Schneidelemente hindurch aufweist.

Einrichtungen zum Zerteilen von Käseblöcken sind bekannt. Es handelt sich dabei zumeist um Längs- oder Querschneidevorrichtungen sowie um Vorrichtungen zum Zerschneiden von runden Käserollen in sektorförmige Teile.

Eine bekannte Längs- und Querschneidvorrichtung (DE-A-1 18 16 008) ist mit senkrecht bzw. waagerecht in einem Rahmen gespannten Schneiddrähten ausgebildet, durch welche der zu zerteilende Käseblock hindurchgeschoben wird. Hierfür ist ein geschlitzter Anschlag vorgesehen, der mit einer an der gegenüberligenden Seite eines Förderers mit mehreren Schneiddrähten ausgestatteten Querschneidvorrichtung zusammenwirkt. Die Schlitze, die mit den Schnieddrähten fluchten, lassen die Drähte frei durch die Käsestücke hindurchtreten.

Weiter ist aus der DE-A-1 11 27 657 eine Vorrichtung zum Zerschneiden von runden Roquefort-Käserollen in sektorförmige Teile mit Hilfe von Schneidstahldrähten bekannt. Diese besitzt einen runden, in senkrechter Richtung beweglichen Schlitten zur Aufnahme der Käserolle, eine darüber angeordnete Führungs- und Zentriervorrichtung sowie eine oberhalb dieser gelagerte Schneidvorrichtung mit einer Anzahl sich kreuzender Schneiddrähte. Die Käserolle wird während der Aufwärtsbewegung des Schlittens durch die Schneiddrähte hindurchgedrückt. Der Schlitten weist diametral verlaufende, gleichmäßig verteilte Nuten auf, in welche sich die Drähte nach Beendigung der Aufwärtsbewegung des Schlittens einlegen, um sich von den aufgeteilten Käsestücken zu lösen.

Die US-A-2 561 274 zeigt eine Schneideinrichtung für ein vorzugsweise rundes Schneidgut, insbesondere für einen Kuchen, die mit Schneiddrähten ausgerüstet ist, welche von oben durch den Kuchen zu drücken sind. Die Schneiddrähte werden mittels eines Handhebels von oben durch den Kuchen gedrückt und müssen in der abgesenkten Stellung verbleiben, bis der geschnittene Kuchen entnommen worden ist. Nach der Entnahme des Kuchens zieht eine Feder den Handgriff wieder in die Ausgangsposition nach oben zurück. Das Bedienungspersonal kann dabei während und nach der Entnahme des Kuchens sehr leicht mit den Schneiddrähten in Kontakt kommen und ist dadurch einer hohen Verletzungsgefahr ausgesetzt.

Ferner ist eine Käseschneidmaschine bekannt, bei der der zu schneidende Käse von unten in die Schneideinrichtung gebracht wird (GB-A 941 941). Dazu wird der Käse auf einen Hubtisch gelegt, der den Käse von unten gegen Schneiddrähte befördert. Je nach Beschaffenheit des Käses werden die Schneiddrähte durch die Aufwärtsbewegung des Käses gespannt oder dringen bereits in den Käse ein. In der obersten Position des Hubtisches befinden sich die Schneiddrähte im vollgespannten Zustand. Der Hubtisch verbleibt nun in dieser Position und die Schneiddrähte werden nach unten bewegt und durchdringen den Käse. Der geschnittene Käse ist zu entnehmen und anschließend sind die Schneiddrähte in ihre Ausgangsposition zurückzuführen.

Mit Schneiddrähten versehene Zerteileinrichtungen haben den Nachteil, daß sie nur für Weichkäse wie Roquefort oder Schmelzkäseblöcke Verwendung finden können. Für eine universelle Anwendung, z. B. zur Zerteilung unterschiedlich großer und vielfach harte Krusten aufweisender Käselaibe, z. B. im Verkaufsstand eines Kaufhauses oder Supermarktes, sind solche bekannten Käsezerteilvorrichtungen ungeeignet.

Beim Käseverkauf, insbesondere mittelharter und harter Sorten, wie Gouda, Emmentaler u. ä., kommt es darauf an, den Lagervorrat in unzerteilten Laibern vorrätig zu halten, wobei der unangeschnittene Käse infolge seiner schützenden Kruste sich lange frischhält. Käselaibe werden üblicherweise im Verkaufslokal von Hand zerteilt. Für das zumeist weibliche Verkaufspersonal stellt der Zerteilvorgang großer und harter Käselaibe eine Schwer- bis Schwerstarbeit dar. Nicht selten ergeben sich dabei Handverletzungen oder zum Arbeitsausfall führende Beschwerden durch Überlastung von Handgelenken und/oder Sehnen.

Der Erfindung liegt die Aufgabe zugrunde, ein Lösung zum mechanischen Zerteilen von Käselaiben oder -blöcken zu schaffen, womit die bisher bestehenden Schwierigkeiten beim Zerteilen mittelharter oder harter Käselaibe, insbesondere im Verkaufslokal, überwunden werden. Den besonderen Einsatzbedingungen entsprechend soll das Gerät kompakt, einfach und insbesondere unfallsicher in der Bedienung sowie zum Anschnitt mit harten Krusten umgebener Käselaibe geeignet sein. Auch soll die Vorrichtung den strengen Anforderungen an Sauberhaltung und Lebensmittelhygiene entsprechen und darüber hinaus einen möglichst geringen Platz beanspruchen.

Ein wichtiger Teil der Aufgabe besteht weiter darin, durch problemloses schnelles Wechseln der Schneideinsätze die Möglichkeit zu schaffen, verschiedene Käsesorten mit unterschiedlichen Schnitteinteilungen zu zerteilen. Insbesondere soll damit die Aufteilung eines Käselaibes in eine Vielzahl von Einzelstücken von unterschiedlicher Größe bzw. unterschiedlichen Formen und Gewichten zu einem verkaufsgerechten Sortiment in einem einzigen Vorgang ermöglicht werden.

Diese Aufgabe wird mit einer Vorrichtung der eingangs bezeichneten Art erfindungsgemäß dadurch gelöst, daß die Schneidelemente als

innerhalb eines starren Rahmens senkrecht stehenden Ebenen angeordnete Messerklingen ausgebildet sind, wobei die den Käselaib tragenden Elemente durch die Klingen hindurch nach oben in eine Vorrichtungs-Tisch-Ebene hebbar sind.

Damit wird erstmals mit Vorteil das mechanische Zerteilen harter, von Kruste umgebener Käselaibe möglich gemacht. Mit Vorteil wird durch diese Anordnung der Flächenteile auf Stützelementen erreicht, daß die Käsestücke nach dem Zerteilvorgang bis über die Schneidelemente in eine freie Lage gehoben werden können. Weiterhin hat die Anordnung den Vorteil, daß Käseabrieb, wie Krümel, nicht in den Spitzen liegen bleiben, wie dies bei bekannten Zerteileinrichtungen der Fall ist. Dadurch wird die Sauberhaltung der Vorrichtung erleichtert und dem Gebot der bei Lebensmitteln unerläßlichen Sauberkeit mühelos Rechnung getragen.

Weiterhin sieht die Erfindung vor, daß die an einem gemeinsamen Rahmen befestigten, den Käselaib tragenden Elemente und/oder die Schneidklingen tragende starre Rahmen an der Vorrichtung auswechselbar angeordnet sind. Dabei ist eine Grundplatte im Maschinentisch mittels schubladenartiger Einschübe auswechselbar eingesetzt und/oder der Rahmen mit den Schneidelementen an den oberen Enden der Führungselemente mittels konischer Hülsen aufgesetzt und mit Schnellbefestigungselementen, z. B. Keilen, festgesetzt.

Mit Vorteil wird durch die unkomplizierte schnelle Auswechselbarkeit der Elemente eine leichte Säuberung dieser Teile ermöglicht und zugleich die Forderung nach problemloser Anpassung der Vorrichtung an unterschiedliche Schnitteinteilungen bei verschiedenen Käselaiben in optimaler Weise erfüllt.

Weiterhin ist vorgesehen, daß die Vorrichtung mit starren, vertikalen Führungselementen ausgerüstet ist, in denen ein vertikal antreibbarer, horizontaler Maschinentisch geführt ist, der die Auflage mit ihrer Grundplatte auswechselbar aufnimmt und daß am oberen Ende der Führungselemente der Rahmen mit den Schneidelementen auswechselbar befestigt ist.

Außerdem sieht die Erfindung vor, daß als Antrieb für den Maschinentisch eine vorzugsweise hydraulische Kolben/Zylindereinheit, vorzugsweise eine mehrfach teleskopierende Einheit vorgesehen ist und daß die Höhe der Klinge zur Mitte hin zu- bzw. abnimmt.

Die Erfindung wird in Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen:

Fig. 1a    einen erfindungsgemäß in Stücke zerteilten, ursprünglich annähernd runden Käselaib in Draufsicht,

Fig. 1b    einen erfindungsgemäß in Stücke zerteilten länglichen Käselaib, ebenfalls in Draufsicht,

Fig. 2    eine Draufsicht auf Schneidelemente in einer Anordnung innerhalb eines starren Rahmens,

Fig. 3    eine Draufsicht auf eine Auflagefäche mit Flächenteilen und dazwischenliegenden Schlitzen,

Fig. 4    eine Seitenansicht der Auflagefläche gemäß Fig. 3,

Fig. 5    eine Seitenansicht der kompletten Vorrichtung, teilweise im Schnitt, mit abgesenkter Auflagefläche (durchgezogene Zeichnungslinien) bzw. mit der Arbeitsfläche in ihrer oberen Endstellung (gestrichelte Linien),

Fig. 6    eine insbesondere für harte Käsesorten mit Kruste geeignete Ausbildung einer Schneidklinge, in Ansicht und geschnitten.

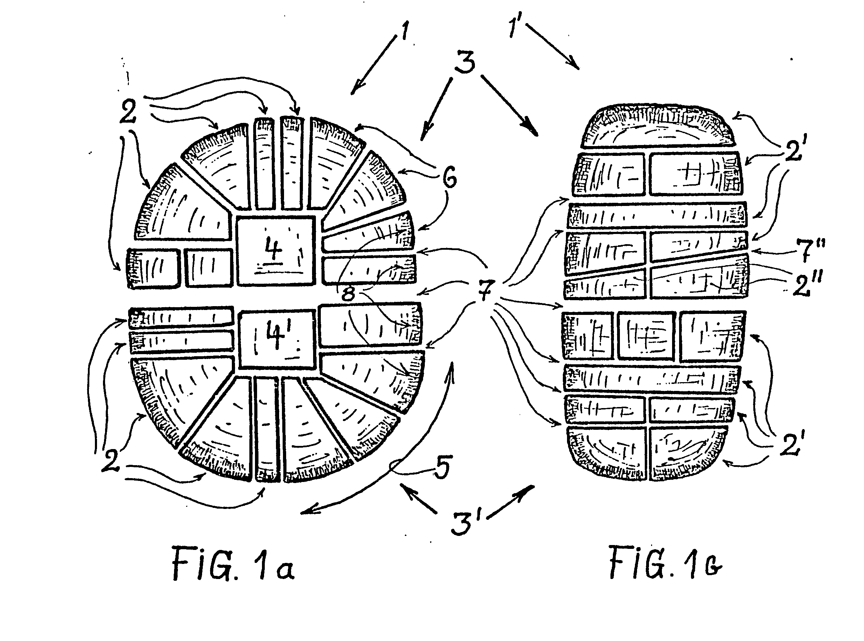

Fig. 1a zeigt einen in Einzelstücke 2 zerteilten Käselaib 1. Dabei sind die Schnittlinien 7 so gelegt, daß sich zunächst zwei Hälften 3, 3 des ursprünglich annähernd runden Käselaibes 1 ergeben. Weiter ist aus jeder dieser Hälften 3, 3' je ein rechteckiges Mittelstück 4, 4' herausgeschnitten. Die umliegenden Randpartien 5 sind durch von den Mittelstücken 4, 4' zum Rand 8 verlaufende Schnittlinien 7 in sektorförmige Stücke 6 zerteilt.

Die in Fig. 1a beispielhaft gezeigte Zerteilungsform des Käselaibes 1 ergibt 21 Einzelstücke 2, die untereinander jeweils unterschiedliche Größe, unterschiedliche Gestalt und unterschiedliches Gewicht aufweisen. Hierdurch erhält ein verkaufsfähiges Sortiment von Einzelstücken 2, das durch Erfahrungen ermittelten Kaufgepflogenheiten der Kundschaft weitestgehend angepaßt ist. Sollte es darüber hinaus erforderlich sein, einzelne dieser Stücke 2 beim Verkauf noch weiter zu unterteilen, so stellt dies für das Verkaufspersonal keine schwierige oder zeitraubende Anforderung mehr dar. Wesentlich bei der gezeigten Art der Aufteilung ist es auch, daß jedes Einzelstück zwei vorzugsweise unterschiedlich lange und gerade Schnittkanten aufweist. Dies ist deshalb wichtig, um beim Hausaufschnitt entweder unterschiedlich große Scheiben abschneiden oder das Käsestück mit dem Käsehobel bearbeiten zu können.

Fig. 1b zeigt eine andere, im Prinzip jedoch ähnlich Art der Zerteilung eines länglichen Käselaibes 1' in unterschiedliche Einzelstücke 2. Auch hierbei ist es zweckmäßig, den Käselaib 1' in zwei Hälften 3, 3' zu zerteilen. Weil es sich um eine andere Käsesorte und einen anders geformten Käselaib 1' handelt, sind im gezeigten Beispiel der Fig. 1b die Schnittlinien 7 im wesentlichen so angeordnet, daß sich eine größere Anzahl eckiger Einzelstücke 2' ergibt, von denen einige annähernd quadratisch, andere schmal und lang sind. Eine Schnittlinie 7'' ist schräg zur Längsrichtung des Wäselaibes 1'

gelegt, um damit vier schiefwinklige Eckstücke 2" auszuschneiden.

Die unterschiedliche Schnittführung bei verschieden geformten Käselaiben 1, 1' und insbesondere unterschiedlichen Käsesorten ist ein wesentlicher Vorteil des erfindungsgemäßen Verfahrens bzw. der entsprechenden Vorrichtung. Damit wird erstmals eine mechanische Zerteilung mittelharter und harter Käselaibe durch eine mechanische Zerteileinrichtung im Verkaufsraum ermöglicht.

Als Vorteile ergeben sich dadurch eine Entlastung·des Verkaufspersonals von schwerer körperlicher Arbeit, eine Freisetzung von Arbeitskräften für das eigentliche Verkaufsgeschehen sowie ein für die Käuferschaft interessanter, zu einem Verkaufsanreiz führender Anblick bei der mechanischen Zerteilung von Käselaiben.

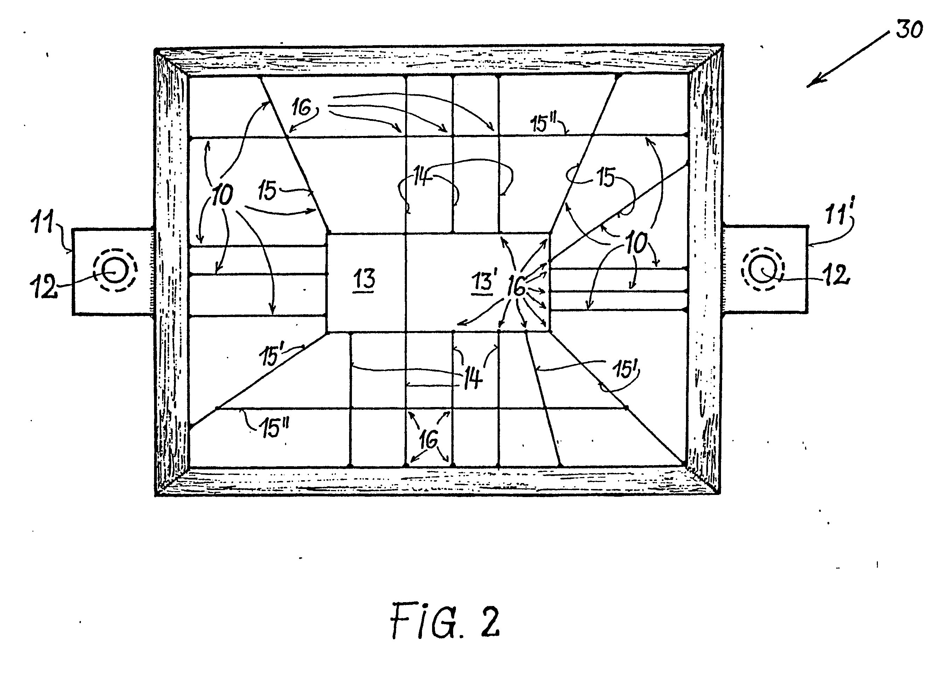

Fig. 2 zeigt in Draufsicht ein Schneidelement 30. In einem Rahmen 9 sind messerartige Klingen 10 angeordnet und zu einem Netz von Schnittlinien vereinigt. Der Rahmen 9 ist von starrer Konstruktion z. B. aus kastenformen Stahl-Hohlprofilen zusammengeschweißt. Daran sind ebenfalls durch Schweißnähte Befestigungslaschen 11, 11' befestigt und mit konischen Rezessen 12, 12' in Form von kegelförmigen Aufnahmebohrungen versehen. Die Anordnung der Klingen 10 bildet entsprechend der Aufschnittsform des Käses, beispielsweise wie in Fig. 1a gezeigt, zwei mittlere Rechtecke 13, 13'. Von dort verlaufen Klingen 14 senkrecht zu den Rechteckseiten und Klingen 15, 15' strahlenförmig nach außen. Weitere Klingen 15" sind parallel zur Mittelachse angeordnet. An den Knotenpunkten 16 sind die Klingen 10', 14, 15, 15' und 15" jeweils miteinander metallisch verbunden. Vorzugsweise ist diese Verbindung im Hartlötverfahren und insbesondere im Schutzgas-Hartlötverfahren ausgeführt. Dadurch erhalten diese Verbindungen eine Festigkeit, die annähernd derjenigen des Klingenstahles entspricht. Dies ist erforderlich, um den zu einem Schneidelement 30 vereinigten Klingen die notwendige Festigkeit im Gesamtverbund zu verleihen, die beim Durchtrennen eines Käselaibes 1, 1' mit harter Kruste erforderlich ist.

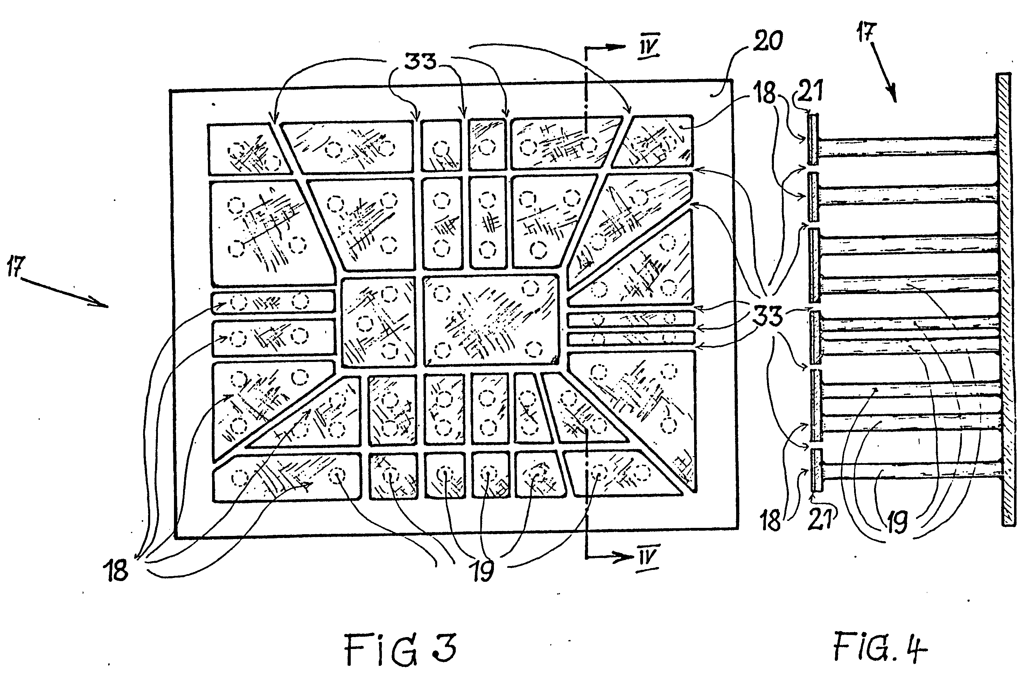

Eine auf die Anordnung des Schneidelementes 30 in Fig. 2 abgestimmte Auflage 17 ist in den Fig. 3 und 4 dargestellt. Fig. 3 zeigt eine Draufsicht, während Fig. 4 eine Seitenansicht, z. T. im Schnitt, entlang einer Schnittlinie IV-IV in Fig. 3 zeigt. Auf einer Grundplatte 20 sind die einzelnen Flächenteile 18 mittels Stützen 19 im Abstand befestigt. Die Grundplatte 20 ist so starr ausgeführt, daß sie den beim Schneidvorgang auf sie einwirkenden Kräften ohne erkennbare Durchbiegung widersteht. Sie ist beispielsweise eine Stahlplatte von ausreichender Stabilität. Die Grundplatte 20 kann auch aus faserverstärktem Kunststoff gefertigt und an der Unterseite zur Stabilisierung vorzugsweise stark verrippt sein. Es kann sich auch um eine in Sandwich-Bauart gefertigte starre Platte handeln. Auf jeden Fall muß sie sowohl außerordentlich stabil als auch relativ leicht sein. Die Stützelemente bzw. Stützen 19 sind z. B. dünnwandige Stahlrohre und durch Schweißung sowohl mit der Grundplatte 20 als auch mit den Flächenteilen 18 verbunden. Abweichend hiervon können sowohl Grundplatte, Stützen und Flächenteile aus Kunststoff oder Plexiglas gefertigt sein.

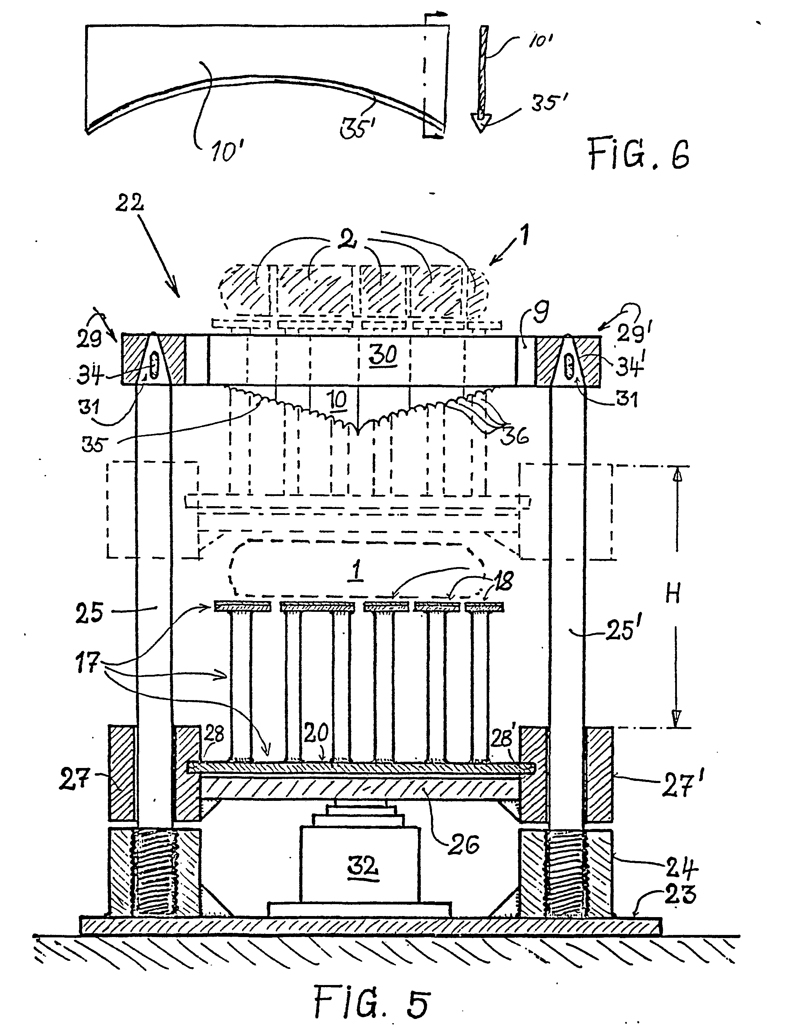

In Fig. 4 sind Flächenteile 18 mit Beschichtungen 21, beispielsweise mit Teflon, dargestellt. Diese sind für Bedürfnisse der Lebensmittelhygiene besonders zweckmäßig. Zwischen den einzelnen Flächenteilen 18, 18' ergeben sich Schlitze 33, durch die die Klingen 10 des Schneidelementes 30 beim Zerteilvorgang frei hindurchtreten können. Eine komplette Zerteilvorrichtung 22 zeigt Fig. 5 in Seitenansicht, sowie in teilweiser Schnittdarstellung. Diese besitzt als Basis ein Gestell mit einer schweren Fußplatte 23 und darauf angeschweißte Gewindebuchsen 24. Darin sind Führungselemente in Form von Führungsstangen 25, 25' eingeschraubt. Ein mit Führungsbuchsen 27, 27' versehener horizontaler Maschinentisch 26 ist von einer hydraulischen Kolben/Zylindereinheit 32 unterstützt. Es handelt sich dabei um einen hydraulischen Teleskopzylinder, welcher im zusammengeschobenen Zustand einen vorteilhaft langen Arbeitshub H besitzt. Die Führungsbuchsen 27, 27' bzw. der Maschinentisch 26 sind mit Einschubführungen 28, 28' versehen, in welche die Grundplatte 20 der Auflage 17 eingeschoben ist. Damit ergibt sich der Vorteil einer leichten und völlig unkomplizierten Auswechselbarkeit dieser Auflage 17. Die oberen Enden 29, 29' der Führungselemente bzw. Führungsstangen 25, 25' sind zur schnellen Befestigung bzw. Lösung von Schneidelementen 30 konisch abgesetzt und mit Keilschlitzen 34, 34' versehen. Hierdurch ergibt sich eine absolut sichere und unkomplizierte Positionierung und Zentrierung der Schneidelemente 30, wobei der Rahmen 9 mit den Befestigungslaschen 11 und deren konischen Aufnahmebohrungen 12 exakt in die konischen Enden 29, 29' der Führungselemente 25, 25' einrastet. Durch die Keilverbindungen 34, 34' wird in Sekundenschnelle mühelos eine sichere Verbindung zwischen dem Rahmen 9 und den Führungselementen 25, 25' hergestellt.

In der unteren, mit ausgezogenen Zeichenlinien dargestellten Position des horizontalen Maschinentisches 26 sowie der Auflage 17 ist der zu zerschneidende Käselaib 1 auf die Flächenteile 18 lose aufgelegt. Eine Zentrierung des Käselaibes ist dabei infolge der beabsichtigten, ungleichförmigen Zerteilung in unterschiedlich große Stücke weder erforderlich noch erwünscht, um jedoch eine Orientierungshilfe für das Personal zu geben, kann die Auflage 17 eine Farbkennzeichnung in Form von Kreisen oder Ellipsen (nicht dargestellt) aufweisen, die etwa nach dem Vorbild einer Schießscheibe ausgebildet ist.

In der mit unterbrochenen Linien gestrichelt dargestellten oberen Position ist der Käselaib 1 durch die Schneidelemente 30 von unten hindurchgedrückt und damit in einer Weise zerteilt, wie dies beispielsweise aus den Fig. 1a und 1b hervorgeht. Dabei ragt die Auflage 17 über die obere Ebene der Schneidelemente 30 hinaus, so daß die zerteilten Käsestücke 2 allseits frei zugänglich sind. Hierdurch wird die Bedienbarkeit der Vorrichtung erheblich erleichtert.

Zwei erfindungswesentliche Ausgestaltungen einer Klinge 10 bzw. 10' zeigen Fig. 5 und 6.

Die Klinge gemäß Fig. 5 ist im Bereich ihrer nach unten weisenden Schneide 35 in einer dachförmigen Schräge ausgebildet. Sie weist eine Vielzahl spitzer Zähne 36 auf. Diese sind im Gegensatz zu Sägezähnen nicht geschränkt. Sie sind zwischen bogenförmig zusammenlaufenden Zahnflanken ausgebildet und ähneln Haifischzähnen.

Bei der Klinge 10' gemäß Fig. 6 ist die Schneide 35' querschnittlich etwa dreieckig ausgebildet und umgekehrt gebogen, wie die Klinge gemäß Fig. 5.

Mit der besonderen Form und Ausbildung der Klingen 10 bzw. 10' wird erreicht, daß im Gegensatz zu einer geradlinigen Messerschneide zunächst der Schneiddruck auf wenige Bereiche konzentriert wird, wodurch es mit der Erfindung erstmalig in überraschender Weise gelingt, auch Krusten harter Käsesorten anzuschneiden und zu durchtrennen.

Es hat sich nämlich herausgestellt, daß die zum Zerteilen eines harten Käselaibes notwendigen Schneidkräfte durch gemäß Fig. 5 und 6 ausgebildete Schneiden mit einem Bruchteil derjenigen Kräfte aufgebracht werden, die mit glatten messerartigen Schneiden aufgewendet werden müßten

Wie Fig. 5 zeigt, ist die erfindungsgemäße Vorrichtung 22 sowohl kompakt als auch unkompliziert. Sie eignet sich infolgedessen zur problemlosen Verwendung innerhalb eines Verkaufsraumes, und erfüllt in idealer Weise die der Erfindung zugrundeliegende Aufgabenstellung.

### Patentansprüche

1. Vorrichtung zum Zerteilen eines Käselaibes (1) oder -blockes in einzelne, von Schnittkanten begrenzte Stücke (2) mit einer mechanischen Zerteileinrichtung, die einen Hubtisch zur Förderung des Käselaibes durch Schniedelemente (30) hindurch aufweist, dadurch gekennzeichnet, daß die Schneidelemente (30) als innerhalb eines starren Rahmens (9) senkrecht stehenden Ebenen angeordnete Messerklingen (10) ausgebildet sind, wobei die den Käselaib tragenden Elemente (18) durch die Klingen hindurch nach oben in eine Vorrichtungs-Tisch-Ebene hebbar sind.

2. Vorrichtung nach Anspruch 1, dadurch gekennzeichnet, daß die an einem gemeinsamen Rahmen befestigten, den Käselaib tragenden Elemente (18) und(oder die Schneidklingen (30) tragende starre Rahmen (9) an der Vorrichtung auswechselbar angeordnet sind.

3. Vorrichtung nach Anspruch 1 oder 2, dadurch gekennzeichnet, daß Grundplatte (20) in einem Maschinentisch (26) mittels schubladenartiger Einschübe (28) auswechselbar eingesetzt ist und/oder daß der Rahmen (9) mit den Schneidelementen (10, 30) an der oberen Enden (29) der Führungselemente (25) mittels konischer Hülsen (12) aufgesetzt und mit Schnellbefestigungselementen, z. B. Keilen (31, 34), festgesetzt ist.

4. Vorrichtung nach einem der vorangehenden Ansprüche, dadurch gekennzeichnet, daß sie (22) mit starren, vertikalen Führungselementen (25) ausgerüstet ist, in denen ein vertikal antreibbarer, horizontaler Maschinentisch (26) geführt ist, der die Auflage (17) mit ihrer Grundplatte (20) auswechselbar aufnimmt, und daß am oberen Ende (29) der Führungselemente (25) der Rahmen (9) mit den Schneidelementen (10, 30) auswechselbar befestigt ist.

5. Vorrichtung nach einem der vorangehenden Ansprüche, dadurch gekennzeichnet, daß als Antrieb für den Maschinentisch (26) eine vorzugsweise hydraulische Kolben/Zylindereinheit (32), vorzugsweise eine mehrfach teleskopierende Einheit, vorgesehen ist.

6. Vorrichtung nach einem der vorangehenden Ansprüche, dadurch gekennzeichnet, die Höhe der Klinge (10 bzw. 10') zur Mitte hin zu- bzw. abnimmt.

### Claims

1. Device for the division of a loaf-shaped cheese or a block of cheese (1) into individual pieces (2), delimited by cut edges, with a mechanical dividing apparatus, which has a lifting table to convey the loaf-shaped cheese through cutting elements (30), characterized in that the cutting elements (30) are constructed as blades (10) arranged within a rigid framework (9) of vertical planes, in which the elements (18) carrying the loaf-shaped cheese are able to be raised through the blades upwards into a device table plane.

2. Device according to claim 1, characterized in that the elements (18), carrying the loaf-shaped cheese and attached to a common framework, and/or rigid frames (9) carrying cutting blades (30) are interchangeably arranged on the device.

3. Device according to claim 1 or 2, characterized in that the base plate (20) is interchangeably inserted in a machine table (26) by means of drawer-like slide-in units (28), and/or that the framework (9) with the cutting elements (10, 30) is placed on the upper ends (29) of the guide elements (25) by means of tapered sleeves (12) and is secured with rapid fastening elements, eg. wedges (31, 34).

4. Device according to one of the preceding claims, characterized in that it (22) is equipped with rigid, vertical guide elements (25), in which a vertically drivable, horizontal machine table (26) is guided, which interchangeably receives the support (17) with its base plate (20), and that at the upper end (29) of the guide elements (25) the framework (9) with the cutting elements (10, 30) is interchangeably attached.

5. Device according to one of the preceding claims, characterized in that as drive for the machine table (26) a preferably hydraulic piston/ cylinder unit (32), preferably a multiply telescoping unit, is provided.

6. Device according to one of the preceding claims, characterized in that the height of the blade (10 or respectively 10') increases or respectively decreases towards the centre.

**Revendications**

1. Appareil pour morceler une meule (1) ou un bloc de fromage en des portions individuelles (2) délimitées par des arêtes de coupe, présentant un dispositif de mortellement mécanique muni d'un plateau de levage pour acheminer la meule de fromage à travers des éléments de coupe (30), caractérisé par le fait que les éléments de coupe (30) sont réalisés sous la forme de lames de couteaux (10) disposées dans des plans verticaux à l'intérieur d'un cadre rigide (9), les éléments (18) portant la meule de fromage pouvant être soulevés, à travers les lames, jusqu'à un plan du plateau de l'appareil.

2. Appareil selon la revendication 1, caractérisé par le fait que les éléments (18) portant la meule de fromage et fixés à un cadre commun, et/ou des cadres rigides (9) portant les lames de coupe (30), sont installés sur l'appareil avec faculté de remplacement.

3. Appareil selon la revendication 1 ou 2, caractérisé par le fait qu'une plaque de base (20) est enchâssée avec faculté de remplacement, dans une table de machine (26), au moyen de glissières (28) du type châssis coulissants; et/ou par le fait que le cadre (9) muni des éléments de coupe (10, 30) est enfilé sur les extrémités supérieures (29) des éléments de guidage (25), au moyen de logements coniques (12), et est consigné à demeure par des éléments de fixation rapide, par exemple des coins (31, 34).

4. Appareil selon l'une des revendications précédentes, caractérisé par le fait qu'il (22) est équipé d'éléments verticaux de guidage (25) rigides, dans lesquels est guidée une table horizontale de machine (26) qui peut être entraînée verticalement et reçoit, avec faculté de remplacement, la structure de soutien (17) avec sa plaque de base (20); et par le fait que le cadre (9) muni des éléments de coupe (10, 30) est fixé, avec faculté de remplacement, à l'extrémité supérieure (29) des éléments de guidage (25).

5. Appareil selon l'une des revendications précédentes, caractérisé par le fait qu'un vérin (32) de préférence hydraulique, préférentiellement un vérin en plusieurs parties télescopiques, est prévu en tant qu'entraînement pour la table de machine (26).

6. Appareil selon l'une des revendications précédentes, caractérisé par le fait que la hauteur de la lame (10, respectivement 10') augmente ou diminue respectivement vers le centre.

FIG. 1a                    FIG. 1b

FIG. 2

FIG 3

FIG. 4

FIG. 6

FIG. 5

7